# EUROPEAN PATENT APPLICATION

(11) **EP 4 757 103 A1**
(43) Date of publication of application: **10.06.2026**
(21) Application number: 25220346.8
(22) Date of filing: 03.12.2025
(51) Int. Cl.: H02J 3/38, H02J 4/25

(54) **MLPE DEVICE AND CONTROL METHOD THEREOF, AND PHOTOVOLTAIC SYSTEM**

(30) Priority: 05.12.2024 CN 202411786907
(71) Applicant: Huawei Technologies Co., Ltd., Shenzhen, Guangdong 518129 (CN)
(72) Inventor: HUANG, Zhaoyu, Shenzhen, 518129 (CN); GU, Guilei, Shenzhen, 518129 (CN)
(74) Representative: Gill Jennings & Every LLP

(57) **Abstract**

This application provides an MLPE device and a control method thereof, and a photovoltaic system. When determining that receiving of a heartbeat signal is continuously interrupted from a first time point to a second time point, the MLPE device considers that signal receiving is abnormal. If it is determined that an output current is less than a current threshold, it indicates that the MLPE device is in a scenario in which safe shutdown is required, and an output voltage is controlled to be less than a voltage threshold or output power is controlled to be less than a power threshold. If it is determined that the output current is greater than or equal to the current threshold, it indicates that the MLPE device is in a scenario in which a communication signal is unstable and that an output can be maintained. In this case, the output voltage is controlled to be greater than or equal to the voltage threshold or the output power is controlled to be greater than or equal to the power threshold from the second time point to a third time point, to prolong output time of the photovoltaic system, and increase effective hours of the photovoltaic system. If receiving of the heartbeat signal is continuously interrupted from the second time point to the third time point, it indicates that signal receiving is not recovered to normal, and the output voltage is controlled to be less than the voltage threshold or the output power is controlled to be less than the power threshold.

## Description

### TECHNICAL FIELD

The present invention relates to the field of power electronics technologies, and in particular, to an MLPE device and control method thereof, and a photovoltaic system.

### BACKGROUND

A conventional photovoltaic system uses a string or central inverter system. On a direct current side, a plurality of photovoltaic modules are connected in series and then connected in parallel to form a photovoltaic array with an output voltage reaching hundreds of volts or even thousands of volts, and the output voltage still exists when an inverter is shut down. When the photovoltaic system encounters a disaster, a continuous high-voltage output that cannot be shut down may cause personal casualties and death of operation and maintenance personnel, and cause asset losses due to fault spreading.

Based on this, in a current photovoltaic system, a module-level power electronics (MLPE) device is installed on a photovoltaic module side, and the MLPE device supports safe shutdown at a photovoltaic module level, so that a problem that there is an output voltage of a photovoltaic array when an inverter is shut down can be effectively resolved. A heartbeat mechanism is used between the inverter and the MLPE device to detect whether behavior is normal. The inverter periodically delivers a heartbeat signal to the MLPE device. After receiving the heartbeat signal, the MLPE device operates normally. After the inverter is shut down, receiving of the heartbeat signal by the MLPE device is abnormal, and the MLPE device enters a safe mode, for example, performs a shutdown operation, to meet a fail-safe design. When an internal communication fault or a power supply fault of the photovoltaic system is caused by an abnormal environment change, the heartbeat signal is abnormal. In a distributed photovoltaic system, common-mode and differential-mode interference caused by different installation environments also cause the heartbeat signal to be abnormal. The MLPE device enters the safe mode in all these cases, and the MLPE device may be triggered to be frequently shut down. As a result, output time of the photovoltaic system decreases, and effective hours of the photovoltaic system are reduced.

### SUMMARY

This application provides an MLPE device and a control method thereof, and a photovoltaic system, to avoid frequent shutdown of the MLPE device and increase effective hours of the photovoltaic system.

According to a first aspect, this application provides an MLPE device, including a main circuit and a controller. The main circuit is connected to a photovoltaic module. The main circuit is configured to perform refined control on one or more photovoltaic modules, and mainly implement functions such as inversion, monitoring, power optimization, and shutdown. The main circuit may be specifically an inverter circuit, an optimization circuit, a shutdown circuit, or the like. The controller is configured to: receive and monitor a heartbeat signal, and determine, based on duration in which receiving of the heartbeat signal is continuously interrupted, whether signal receiving is abnormal. The controller starts timing from a first time point at which receiving of the heartbeat signal is interrupted. If receiving of the heartbeat signal is continuously interrupted from the first time point to a second time point, it is considered that signal receiving is abnormal. The controller may determine, based on a value of an output current of the main circuit at this time, a scenario of the MLPE device, and perform a corresponding operation. Specifically, if it is determined that the output current of the main circuit is less than a current threshold, it indicates that at this time, a next-stage device configured to receive the output current of the MLPE device does not need a large input current, and the device may be in a standby state or a power-limited operating state. In this case, the MLPE device does not need to be in a working condition of a large output voltage or large output power. In other words, the MLPE device is in a scenario in which safe shutdown is required, and the output voltage of the main circuit is controlled to be less than a voltage threshold or the output power of the main circuit is controlled to be less than a power threshold. If it is determined that the output current is greater than or equal to the current threshold, it indicates that at this time, the next-stage device configured to receive the output current of the MLPE device needs a large input current, the device may be in a normal operating state, and the MLPE device needs to normally output the voltage or the power. In this case, it is inferred that the MLPE device may be in a scenario in which a communication signal is unstable, which causes receiving of the heartbeat signal to be abnormal. The MLPE device may be controlled to maintain an output, and the output voltage is controlled to be greater than or equal to the voltage threshold or the output power is controlled to be greater than or equal to the power threshold from the second time point to a third time point, to prolong output time of the photovoltaic system, and increase effective hours of the photovoltaic system. If receiving of the heartbeat signal is continuously interrupted from the second time point to the third time point, it indicates that signal receiving is not recovered to normal, and the output voltage needs to be controlled to be less than the voltage threshold or the output power to be controlled to be less than the power threshold.

In some embodiments of this application, the controller is further configured to: if the heartbeat signal is received from the second time point to the third time point, indicating that signal receiving may be recovered to normal, continuously control the output voltage to be greater than or equal to the voltage threshold or the output power to be greater than or equal to the power threshold, to avoid false triggering of frequent shutdown of the MLPE device.

In some embodiments of this application, the controller is further configured to: when it is determined that duration in which receiving of the heartbeat signal is continuously interrupted is less than duration between the first time point and the second time point, indicating that signal receiving is normal, control the main circuit to operate normally, that is, control the output voltage of the main circuit to be greater than or equal to the voltage threshold or the output power of the main circuit to be greater than or equal to the power threshold.

In some embodiments of this application, the main circuit includes a switching transistor connected to the photovoltaic module. When controlling the output voltage to be less than the voltage threshold or the output power to be less than the power threshold, the controller may decrease the output voltage or the output power by turning off the switching transistor, to implement a shutdown operation of the main circuit.

In some embodiments of this application, the MLPE device may be an optimizer, a shutdown device, a micro inverter, or the like.

According to a second aspect, this application provides a control method of an MLPE device, including: If receiving of a heartbeat signal is continuously interrupted from a first time point to a second time point, it is considered that signal receiving is abnormal. If it is determined that an output current of a main circuit is less than a current threshold, it indicates that at this time, a next-stage device configured to receive the output current of the MLPE device does not need a large input current, and the device may be in a standby state or a power-limited operating state. In this case, the MLPE device does not need to be in a working condition of a large output voltage or large output power. In other words, the MLPE device is in a scenario in which safe shutdown is required, and the output voltage of the main circuit is controlled to be less than a voltage threshold or the output power of the main circuit is controlled to be less than a power threshold. If it is determined that the output current is greater than or equal to the current threshold, it indicates that at this time, the next-stage device configured to receive the output current of the MLPE device needs a large input current, the device may be in a normal operating state, and the MLPE device needs to normally output the voltage or the power. In this case, it is inferred that the MLPE device may be in a scenario in which a communication signal is unstable, which causes receiving of the heartbeat signal to be abnormal. The MLPE device may be controlled to maintain an output, and the output voltage is controlled to be greater than or equal to the voltage threshold or the output power is controlled to be greater than or equal to the power threshold from the second time point to a third time point, to prolong output time of a photovoltaic system, and increase effective hours of the photovoltaic system. If receiving of the heartbeat signal is continuously interrupted from the second time point to the third time point, it indicates that signal receiving is not recovered to normal, and the output voltage needs to be controlled to be less than the voltage threshold or the output power to be controlled to be less than the power threshold.

In some embodiments of this application, the method further includes: if the heartbeat signal is received from the second time point to the third time point, indicating that signal receiving may be recovered to normal, continuously controlling the output voltage to be greater than or equal to the voltage threshold or the output power to be greater than or equal to the power threshold, to avoid false triggering of frequent shutdown of the MLPE device.

In some embodiments of this application, the method further includes: when duration in which receiving of the heartbeat signal is continuously interrupted is less than duration between the first time point and the second time point, indicating that signal receiving is normal, controlling the main circuit to operate normally, that is, controlling the output voltage to be greater than or equal to the voltage threshold or the output power to be greater than or equal to the power threshold.

In some embodiments of this application, controlling the output voltage to be less than the voltage threshold or the output power to be less than the power threshold includes: turning off a switching transistor that is in the MLPE device and that is configured to connect to a photovoltaic module, and decreasing the output voltage or the output power, to implement a shutdown operation of the main circuit.

According to a third aspect, this application provides a photovoltaic system, including an optimizer and a power converter, where an input of the optimizer is configured to connect to a photovoltaic module, an output of the optimizer is connected to an input of the power converter, and an output of the power converter is configured to connect to a grid or a load. The optimizer may optimize power of the connected photovoltaic module, and can track a maximum power point (maximum power point) of the photovoltaic module in real time, to implement a maximum power output of the photovoltaic module. The power converter is configured to send a heartbeat signal to the optimizer. For example, the power converter usually transparently transmits the heartbeat signal to the optimizer periodically, for example, every 4.7 seconds. The optimizer is configured to: receive and monitor the heartbeat signal, and determine, based on duration in which receiving of the heartbeat signal is continuously interrupted, whether signal receiving is abnormal. The optimizer starts timing from a first time point at which receiving of the heartbeat signal is interrupted. If receiving of the heartbeat signal is continuously interrupted from the first time point to a second time point, it is considered that signal receiving is abnormal. The optimizer may determine, based on a value of an output current at this time, a scenario of the optimizer, and perform a corresponding operation. Specifically, if it is determined that the output current is less than a current threshold, it indicates that at this time, the power converter does not need a large input current, and the power converter may be in a standby state or a power-limited operating state. In this case, the optimizer does not need to be in a working condition of a large output voltage or large output power. In other words, the optimizer is in a scenario in which safe shutdown is required, and the output voltage is controlled to be less than a voltage threshold or the output power is controlled to be less than a power threshold. If it is determined that the output current is greater than or equal to the current threshold, it indicates that at this time, the power converter needs a large input current, the power converter may be in a normal operating state, and the optimizer needs to normally output the voltage or the power. In this case, it is inferred that the optimizer may be in a scenario in which a communication signal is unstable, which causes receiving of the heartbeat signal to be abnormal. The optimizer may be controlled to maintain an output, and the output voltage is controlled to be greater than or equal to the voltage threshold or the output power is controlled to be greater than or equal to the power threshold from the second time point to a third time point, to prolong output time of the photovoltaic system, and increase effective hours of the photovoltaic system. If receiving of the heartbeat signal is continuously interrupted from the second time point to the third time point, it indicates that signal receiving is not recovered to normal, and the output voltage needs to be controlled to be less than the voltage threshold or the output power to be controlled to be less than the power threshold.

In some embodiments of this application, the optimizer is further configured to: if the heartbeat signal is received from the second time point to the third time point, indicating that signal receiving may be recovered to normal, continuously control the output voltage to be greater than or equal to the voltage threshold or the output power to be greater than or equal to the power threshold, to avoid false triggering of frequent shutdown of the optimizer.

In some embodiments of this application, the optimizer is further configured to: when duration in which the heartbeat signal is continuously interrupted is less than duration between the first time point and the second time point, indicating that signal receiving is normal, operate normally and control the output voltage to be greater than or equal to the voltage threshold or the output power to be greater than or equal to the power threshold.

In some embodiments of this application, the optimizer includes a switching transistor connected to the photovoltaic module. When controlling the output voltage to be less than the voltage threshold or the output power to be less than the power threshold, the optimizer may decrease the output voltage or the output power by turning off the switching transistor, to implement a shutdown operation of the optimizer.

In some embodiments of this application, the photovoltaic system usually includes a plurality of optimizers. Outputs of the plurality of optimizers are connected in series and then connected to the input of the power converter. The power converter may transparently transmit a heartbeat signal to each optimizer, and each optimizer monitors a heartbeat signal of the optimizer, to implement the foregoing operations.

In some embodiments of this application, the power converter may be a direct current-direct current DC-DC converter or a direct current-alternating current DC-AC converter.

### BRIEF DESCRIPTION OF DRAWINGS

FIG. 1 is a diagram of a timeline based on which an MLPE device performs determining according to an embodiment of this application;
FIG. 2A and FIG. 2B are a schematic flowchart of a control method of an MLPE device according to an embodiment of this application;
FIG. 3 is a diagram of a structure of a photovoltaic system according to an embodiment of this application; and
FIG. 4 is a flowchart of controlling a photovoltaic system according to an embodiment of this application.

### DESCRIPTION OF EMBODIMENTS

To make objectives, technical solutions, and advantages of this application clearer, the following further describes this application in detail with reference to accompanying drawings. However, example implementations may be implemented in a plurality of forms and should not be construed as being limited to implementations described herein. On the contrary, these implementations are provided such that this application is more comprehensive and complete and fully conveys the concept of the example implementations to a person skilled in the art. Same reference numerals in the accompanying drawings indicate same or similar structures, and therefore repeated descriptions thereof are omitted. Words for expressing positions and directions in this application are described by using the accompanying drawings as examples. However, changes may be made as required, and all changes shall fall within the protection scope of this application. The accompanying drawings in this application are merely used to illustrate a relative positional relationship, and do not indicate a true scale.

It should be noted that specific details are set forth in the following description for ease of fully understanding this application. However, this application can be implemented in a plurality of manners different from those described herein, and a person skilled in the art can perform similar promotion without departing from a connotation of this application. Therefore, this application is not limited to the following disclosed specific implementations. The following descriptions of this specification are example implementations of this application. However, the descriptions are intended to describe the general principle of this application, and are not intended to limit the scope of this application. The protection scope of this application shall be defined by the appended claims.

To facilitate understanding of embodiments of this application, the following first describes related technologies in embodiments of this application.

Terms used in the following embodiments are merely intended to describe specific embodiments, but are not intended to limit this application. Terms "one", "a", and "this" of singular forms used in this specification and the appended claims of this application are also intended to include a form like "one or more", unless otherwise specified in the context clearly. It may be further understood that, in the following embodiments of this application, "at least one" means one, two, or more.

Reference to "an embodiment" or the like described in this specification means that one or more embodiments of this application include a particular feature, structure, or characteristic described in combination with embodiments. Therefore, statements such as "in an embodiment", "in some implementations", and "in other implementations" that appear at different places in this specification do not necessarily mean to refer to a same embodiment. Instead, the statements mean to refer to "one or more but not all of embodiments", unless otherwise specifically emphasized in another manner. Terms "include", "have", and variants of the terms all mean "include but are not limited to", unless otherwise specifically emphasized in another manner.

Embodiments of this application provide an MLPE device and a control method thereof, and a photovoltaic system. On a premise that a safety requirement is met, a scenario of the MLPE device in this case is distinguished by determining a value of an output current of the MLPE device. When it is determined that the MLPE device is in a scenario in which safe shutdown is required, the MLPE device is controlled to enter a safe mode, for example, perform a shutdown operation. When it is determined that the MLPE device is in a scenario in which a communication signal is unstable, the MLPE device may be controlled to maintain an output, so that a loss of output time of the photovoltaic system can be compensated for, effective hours of the photovoltaic system can be increased, and frequent shutdown of the MLPE device can be avoided.

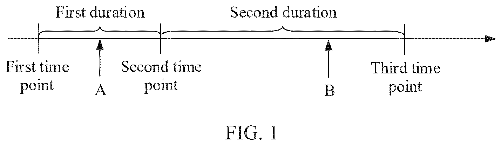

The MLPE device provided in embodiments of this application may specifically include a main circuit and a controller. The main circuit is connected to a photovoltaic module. The main circuit is configured to perform refined control on one or more photovoltaic modules, and mainly implement functions such as inversion, monitoring, power optimization, and shutdown. The main circuit may be specifically an inverter circuit, an optimization circuit, a shutdown circuit, or the like. Correspondingly, the MLPE device may be specifically a micro inverter, an optimizer, a shutdown device, or the like. The controller is configured to: receive and monitor a heartbeat signal, and determine, based on duration in which receiving of the heartbeat signal is continuously interrupted, whether signal receiving is abnormal. Refer to FIG. 1. The controller starts timing from a first time point at which receiving of the heartbeat signal is interrupted. If receiving of the heartbeat signal is continuously interrupted in first duration from the first time point to a second time point, it is considered that signal receiving is abnormal. The controller may determine, based on a value of an output current of the main circuit at this time, a scenario of the MLPE device, and perform a corresponding operation. Specifically, if it is determined that the output current of the main circuit is less than a current threshold, it indicates that at this time, a next-stage device configured to receive the output current of the MLPE device does not need a large input current, and the device may be in a standby state or a power-limited operating state. In this case, the MLPE device does not need to be in a working condition of a large output voltage or large output power. In other words, the MLPE device is in a scenario in which safe shutdown is required, and the output voltage of the main circuit is controlled to be less than a voltage threshold or the output power of the main circuit is controlled to be less than a power threshold. For example, the controller may turn off a switching transistor that is in the main circuit and that is connected to the photovoltaic module, to decrease the output voltage or the output power, and implement a shutdown operation of the main circuit. If it is determined that the output current is greater than or equal to the current threshold, it indicates that at this time, the next-stage device configured to receive the output current of the MLPE device needs a large input current, the device may be in a normal operating state, and the MLPE device needs to normally output the voltage or the power. In this case, it is inferred that the MLPE device is in a scenario in which a communication signal is unstable, which causes receiving of the heartbeat signal to be abnormal. The MLPE device may be controlled to maintain an output, and the output voltage is controlled to be greater than or equal to the voltage threshold or the output power is controlled to be greater than or equal to the power threshold in second duration from the second time point to a third time point, to prolong the output time of the photovoltaic system, and increase the effective hours of the photovoltaic system. If receiving of the heartbeat signal is continuously interrupted in the second duration from the second time point to the third time point, it indicates that signal receiving is not recovered to normal, and the output voltage needs to be controlled to be less than the voltage threshold or the output power to be controlled to be less than the power threshold. For example, the controller may turn off the switching transistor that is in the main circuit and that is connected to the photovoltaic module, to decrease the output voltage or the output power, and implement the shutdown operation of the main circuit.

Refer to FIG. 1. In this application, if the heartbeat signal is received in the second duration from the second time point to the third time point, for example, the heartbeat signal is received at a time point B in FIG. 1, it indicates that signal receiving may be recovered to normal. In this case, the output voltage is continuously controlled to be greater than or equal to the voltage threshold or the output power to be greater than or equal to the power threshold, to avoid false triggering of frequent shutdown of the MLPE device.

Refer to FIG. 1. In this application, the controller starts timing from the first time point at which receiving of the heartbeat signal is interrupted. When duration in which receiving of the heartbeat signal is continuously interrupted is less than first duration between the first time point and the second time point, for example, the heartbeat signal is received at a time point A in FIG. 1, it is considered that signal receiving is normal, the main circuit may be controlled to operate normally, that is, the output voltage of the main circuit is controlled to be greater than or equal to the voltage threshold or the output power of the main circuit to be greater than or equal to the power threshold.

In some embodiments of this application, the second duration may be greater than the first duration, so that frequent shutdown operations caused by the unstable communication signal can be fully excluded. For example, a proper value, for example, 30 seconds, may be selected from 1 second to 30 seconds for the first duration, and a proper value, for example, 2 minutes, may be selected from more than 1 minute for the second duration.

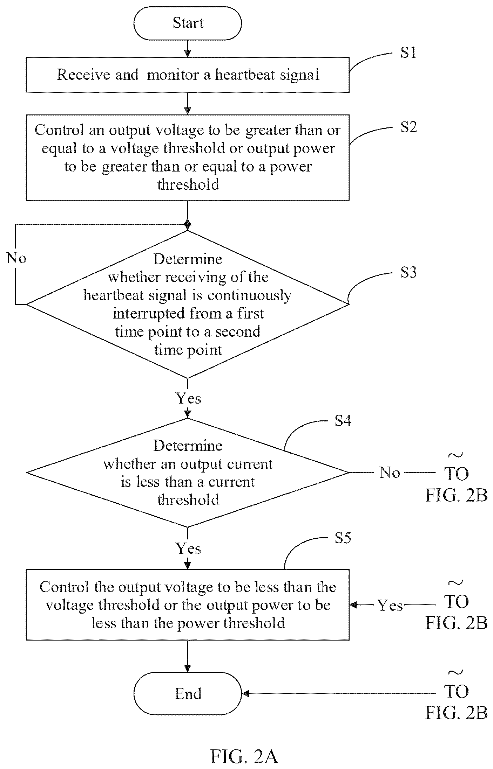

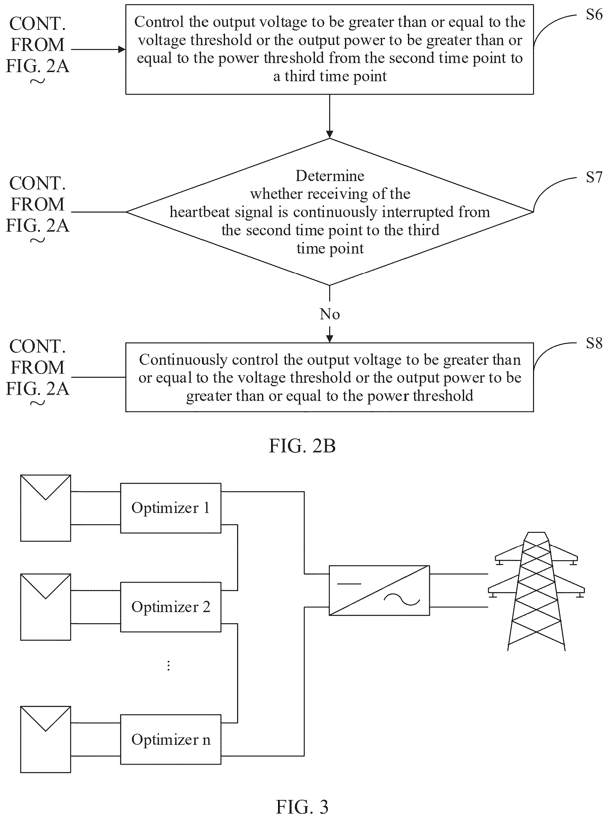

Refer to FIG. 2A and FIG. 2B. An embodiment of this application further provides a control method of an MLPE device, including the following steps.

S1: Receive and monitora heartbeat signal.

S2: Control an output voltage to be greater than or equal to a voltage threshold or output power to be greater than or equal to a power threshold.

S3: Start timing from a first time point at which receiving of the heartbeat signal is interrupted, and determine whether receiving of the heartbeat signal is continuously interrupted from the first time point to a second time point. When it is determined that receiving of the heartbeat signal is continuously interrupted from the first time point to the second time point, step S4 is performed.

S4: Determine whether an output current is less than a current threshold. When it is determined that the output current is less than the current threshold, step S5 is performed. When it is determined that the output current is greater than or equal to the current threshold, step S6 is performed.

S5: Control the output voltage to be less than the voltage threshold or the output power to be less than the power threshold. For example, a switching transistor that is in a main circuit and that is connected to a photovoltaic module may be turned off, to decrease the output voltage or the output power, and implement a shutdown operation of the main circuit.

S6: Control the output voltage to be greater than or equal to the voltage threshold or the output power to be greater than or equal to the power threshold from the second time point to a third time point.

S7: Determine whether receiving of the heartbeat signal is continuously interrupted from the second time point to the third time point. When it is determined that receiving of the heartbeat signal is continuously interrupted from the second time point to the third time point, step S5 is performed. When it is determined that the heartbeat signal is received from the second time point to the third time point, step S8 is performed.

S8: Continuously control the output voltage to be greater than or equal to the voltage threshold or the output power to be greater than or equal to the power threshold.

Refer to FIG. 3. An embodiment of this application further provides a photovoltaic system, specifically including an optimizer and a power converter. An input of the optimizer is configured to connect to a photovoltaic module, an output of the optimizer is connected to an input of the power converter, and an output of the power converter is configured to connect to a grid or a load. The optimizer may optimize power of the connected photovoltaic module, and can track a maximum power point (maximum power point) of the photovoltaic module in real time, to implement a maximum power output of the photovoltaic module. The power converter is configured to send a heartbeat signal to the optimizer. For example, the power converter usually transparently transmits the heartbeat signal to the optimizer periodically, for example, every 4.7 seconds. The optimizer is configured to: receive and monitor the heartbeat signal, and determine, based on duration in which receiving of the heartbeat signal is continuously interrupted, whether signal receiving is abnormal. The optimizer starts timing from a first time point at which receiving of the heartbeat signal is interrupted. If receiving of the heartbeat signal is continuously interrupted in first duration from the first time point to a second time point, it is considered that signal receiving is abnormal. The optimizer may determine, based on a value of an output current at this time, a scenario of the optimizer, and perform a corresponding operation. Specifically, if it is determined that the output current is less than a current threshold, it indicates that at this time, the power converter does not need a large input current, and the power converter may be in a standby state or a power-limited operating state. In this case, the optimizer does not need to be in a working condition of a large output voltage or large output power. In other words, the optimizer is in a scenario in which safe shutdown is required, and the output voltage is controlled to be less than a voltage threshold or the output power is controlled to be less than a power threshold. For example, a switching transistor connected to the photovoltaic module may be turned off, to decrease the output voltage or the output power, and implement a shutdown operation of the optimizer. If it is determined that the output current is greater than or equal to the current threshold, it indicates that at this time, the power converter needs a large input current, the power converter may be in a normal operating state, and the optimizer needs to normally output the voltage or the power. In this case, it is inferred that the optimizer may be in a scenario in which a communication signal is unstable, which causes receiving of the heartbeat signal to be abnormal. The optimizer may be controlled to maintain an output, and the output voltage is controlled to be greater than or equal to the voltage threshold or the output power is controlled to be greater than or equal to the power threshold in second duration from the second time point to a third time point, to prolong output time of the photovoltaic system, and increase effective hours of the photovoltaic system. If receiving of the heartbeat signal is continuously interrupted from the second time point to the third time point, it indicates that signal receiving is not recovered to normal, and the output voltage needs to be controlled to be less than the voltage threshold or the output power to be controlled to be less than the power threshold. For example, the switching transistor connected to the photovoltaic module may be turned off, to decrease the output voltage or the output power, and implement the shutdown operation of the optimizer.

In this application, if the heartbeat signal is received from the second time point to the third time point, it indicates that signal receiving may be recovered to normal, and the output voltage is continuously controlled to be greater than or equal to the voltage threshold or the output power to be greater than or equal to the power threshold, to avoid false triggering of frequent shutdown of the optimizer.

In this application, timing is started from the first time point at which receiving of the heartbeat signal is interrupted. When the duration in which receiving of the heartbeat signal is continuously interrupted is less than duration between the first time point and the second time point, it is considered that signal receiving is normal, the main circuit may be controlled to operate normally, that is, the output voltage is controlled to be greater than or equal to the voltage threshold or the output power to be greater than or equal to the power threshold.

In some embodiments of this application, the photovoltaic system usually includes a plurality of optimizers. Outputs of the plurality of optimizers are connected in series and then connected to the input of the power converter. The power converter may transparently transmit a heartbeat signal to each optimizer, and each optimizer monitors a heartbeat signal of the optimizer, to implement the foregoing operations.

In some embodiments of this application, the power converter may be specifically a direct current-direct current (DC-DC) converter or a direct current-alternating current (DC-AC) converter.

The following uses a specific example to describe a control procedure of the photovoltaic system provided in embodiments of this application.

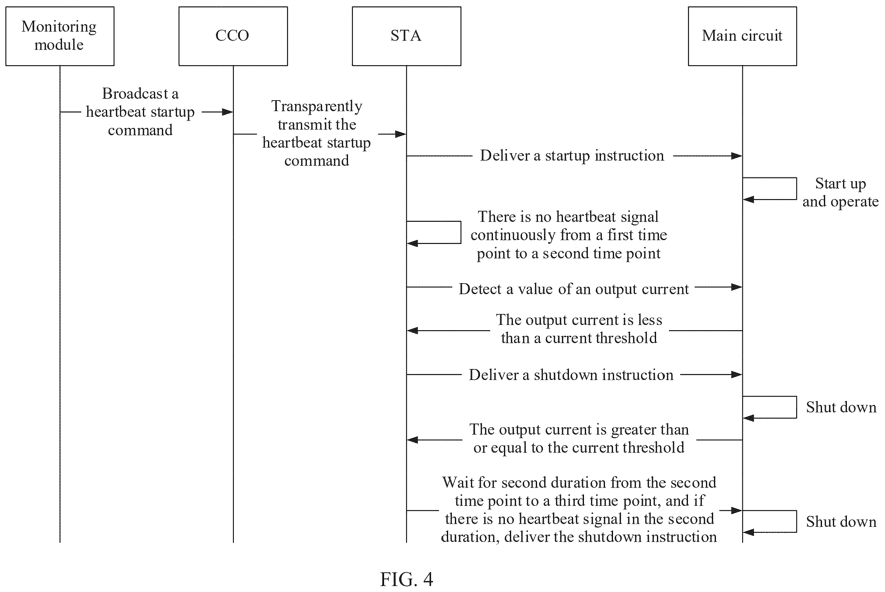

Refer to FIG. 4. The photovoltaic system includes an optimizer and an inverter. An input of the optimizer is connected to a photovoltaic module, an output of the optimizer is connected to an input of the inverter, and an output of the inverter is connected to a grid or a load. The inverter includes a monitoring module, an inverter module, and a transparent transmission (CCO) module. The optimizer includes a main circuit and a controller (STA). The monitoring module of the inverter broadcasts a heartbeat startup command. The CCO module periodically and transparently transmits the command to the STA of the optimizer. After receiving the heartbeat startup command, the STA of the optimizer controls the main circuit to start up and operate. The STA of the optimizer monitors a heartbeat signal, starts timing from a first time point at which receiving of the heartbeat signal is interrupted, determines that there is no heartbeat signal continuously in first duration from the first time point to a second time point, and detects a value of an output current. If the output current is less than a current threshold, the STA delivers a shutdown instruction to the main circuit, and a switching transistor that is in the main circuit and that is connected to the photovoltaic module is turned off. If the output current is greater than or equal to the current threshold, the STA waits for second duration from the second time point to a third time point, and if there is no heartbeat signal in the second duration, the STA delivers the shutdown instruction to the main circuit, and a switching transistor that is in the main circuit and that is connected to the photovoltaic module is turned off.

According to the MLPE device and control method thereof, and the photovoltaic system provided in this application, when determining that receiving of the heartbeat signal is continuously interrupted from the first time point to the second time point, the MLPE device considers that signal receiving is abnormal, and may determine the scenario of the MLPE device based on the value of the output current at this time, to distinguish operation behavior to be performed. If it is determined that the output current is less than the current threshold, it indicates that at this time, the next-stage device configured to receive the output current of the MLPE device does not need the large input current, and the device may be in the standby state or the power-limited operating state. In this case, the MLPE device does not need to be in the working condition of the large output voltage or the large output power. In other words, the MLPE device is in the scenario in which safe shutdown is required, and the output voltage is controlled to be less than the voltage threshold or the output power is controlled to be less than the power threshold. If it is determined that the output current is greater than or equal to the current threshold, it indicates that at this time, the next-stage device configured to receive the output current of the MLPE device needs the large input current, the device may be in the normal operating state, and the MLPE device needs to normally output the voltage or the power. In this case, it is inferred that the MLPE device is in the scenario in which the communication signal is unstable, which causes receiving of the heartbeat signal to be abnormal. The MLPE device may be controlled to maintain the output, and the output voltage is controlled to be greater than or equal to the voltage threshold or the output power is controlled to be greater than or equal to the power threshold in the second duration from the second time point to the third time point, to prolong the output time of the photovoltaic system, and increase the effective hours of the photovoltaic system. If receiving of the heartbeat signal is continuously interrupted from the second time point to the third time point, it indicates that signal receiving is not recovered to normal, and the output voltage needs to be controlled to be less than the voltage threshold or the output power to be controlled to be less than the power threshold.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A module-level power electronics MLPE device, comprising a main circuit and a controller, wherein the main circuit is configured to connect to a photovoltaic module; and
the controller is configured to: when receiving of a heartbeat signal is continuously interrupted from a first time point to a second time point, if an output current of the main circuit is less than a current threshold, control an output voltage of the main circuit to be less than a voltage threshold or output power of the main circuit to be less than a power threshold; or
if the output current is greater than or equal to the current threshold, control the output voltage to be greater than or equal to the voltage threshold or the output power to be greater than or equal to the power threshold from the second time point to a third time point; and if receiving of the heartbeat signal is continuously interrupted from the second time point to the third time point, control the output voltage to be less than the voltage threshold or the output power to be less than the power threshold.

2. The MLPE device according to claim 1, wherein the controller is further configured to: if the heartbeat signal is received from the second time point to the third time point, continuously control the output voltage to be greater than or equal to the voltage threshold or the output power to be greater than or equal to the power threshold.

3. The MLPE device according to claim 1 or 2, wherein the controller is further configured to: when duration in which receiving of the heartbeat signal is continuously interrupted is less than duration between the first time point and the second time point, control the output voltage to be greater than or equal to the voltage threshold or the output power to be greater than or equal to the power threshold.

4. The MLPE device according to any one of claims 1 to 3, wherein the main circuit comprises a switching transistor connected to the photovoltaic module; and
the controller is configured to turn off the switching transistor, to control the output voltage to be less than the voltage threshold or the output power to be less than the power threshold.

5. The MLPE device according to any one of claims 1 to 4, wherein the MLPE device is an optimizer, a shutdown device, or a micro inverter.

6. A control method of a module-level power electronics MLPE device, comprising:
when receiving of a heartbeat signal is continuously interrupted from a first time point to a second time point, if it is determined that an output current of a main circuit is less than a current threshold, controlling an output voltage of the main circuit to be less than a voltage threshold or output power of the main circuit to be less than a power threshold; or
if it is determined that the output current is greater than or equal to the current threshold, controlling the output voltage to be greater than or equal to the voltage threshold or the output power to be greater than or equal to the power threshold from the second time point to a third time point; and if receiving of the heartbeat signal is continuously interrupted from the second time point to the third time point, controlling the output voltage to be less than the voltage threshold or the output power to be less than the power threshold.

7. The control method according to claim 6, further comprising:
if the heartbeat signal is received from the second time point to the third time point, continuously controlling the output voltage to be greater than or equal to the voltage threshold or the output power to be greater than or equal to the power threshold.

8. The control method according to claim 6 or 7, further comprising:
when duration in which receiving of the heartbeat signal is continuously interrupted is less than duration between the first time point and the second time point, controlling the output voltage to be greater than or equal to the voltage threshold or the output power to be greater than or equal to the power threshold.

9. The control method according to any one of claims 6 to 8, wherein controlling the output voltage to be less than the voltage threshold or the output power to be less than the power threshold comprises: turning off a switching transistor that is in the MLPE device and that is configured to connect to a photovoltaic module.

10. A photovoltaic system, comprising an optimizer and a power converter, wherein an input of the optimizer is configured to connect to a photovoltaic module, an output of the optimizer is connected to an input of the power converter, and an output of the power converter is configured to connect to a grid or a load;
the optimizer is configured to track a maximum power point of the photovoltaic module;
the power converter is configured to send a heartbeat signal to the optimizer; and
the optimizer is configured to: when receiving of the heartbeat signal is continuously interrupted from a first time point to a second time point, if it is determined that an output current is less than a current threshold, control an output voltage to be less than a voltage threshold or output power to be less than a power threshold; or
if it is determined that the output current is greater than or equal to the current threshold, control the output voltage to be greater than or equal to the voltage threshold or the output power to be greater than or equal to the power threshold from the second time point to a third time point; and if receiving of the heartbeat signal is continuously interrupted from the second time point to the third time point, control the output voltage to be less than the voltage threshold or the output power to be less than the power threshold.

11. The photovoltaic system according to claim 10, wherein the optimizer is further configured to: if the heartbeat signal is received from the second time point to the third time point, continuously control the output voltage to be greater than or equal to the voltage threshold or the output power to be greater than or equal to the power threshold.

12. The photovoltaic system according to claim 10 or 11, wherein the optimizer is further configured to: when duration in which receiving of the heartbeat signal is continuously interrupted is less than duration between the first time point and the second time point, control the output voltage to be greater than or equal to the voltage threshold or the output power to be greater than or equal to the power threshold.

13. The photovoltaic system according to any one of claims 10 to 12, wherein the optimizer comprises a switching transistor connected to the photovoltaic module; and
the optimizer is configured to turn off the switching transistor, to control the output voltage to be less than the voltage threshold or the output power to be less than the power threshold.

14. The photovoltaic system according to any one of claims 10 to 13, wherein the photovoltaic system comprises a plurality of optimizers, and outputs of the plurality of optimizers are connected in series and then connected to the input of the power converter.

15. The photovoltaic system according to any one of claims 10 to 14, wherein the power converter is a direct current-direct current DC-DC converter or a direct current-alternating current DC-AC converter.
